# EUROPÄISCHE PATENTSCHRIFT

(11) **EP 1 429 304 B1**
(45) Veröffentlichungstag und Bekanntmachung des Hinweises auf die Patenterteilung: **30.07.2008**
(21) Anmeldenummer: 03025939.4
(22) Anmeldetag: 13.11.2003
(51) Int. Cl.: G08G 1/0969, G01C 21/36, B60R 16/00

(54) **Fahrerinformationssystem**
Driver information system
Système d'information d'un conducteur

(30) Priorität: 13.11.2002 DE 10252689
(43) Veröffentlichungstag der Anmeldung: 16.06.2004
(73) Patentinhaber: Harman Becker Automotive Systems GmbH, 76307 Karlsbad (DE)
(72) Erfinder: Taxis, Heiko, Becker-Göring-Strasse 16 76307 Karlsbad (DE)
(74) Vertreter: Bertsch, Florian Oliver

(56) Entgegenhaltungen:
- DE-A1- 10 060 981
- DE-A1- 10 106 965
- DE-A1- 10 152 626
- DE-A1- 19 711 788
- DE-A1- 19 839 811
- DE-A1- 19 908 087
- DE-A1- 19 955 070

## Beschreibung

Die vorliegende Erfindung betrifft ein Fahrerinformationssystem mit einer Bedienvorrichtung, die zumindest zwei Bedienelemente und eine Halteeinheit für die Bedienelemente aufweist, und mit einer Steuereinrichtung zur Auswertung der von den Bedienelementen gelieferten Steuersignale.

Fahrerinformationssysteme der vorgenannten Art sind allgemein bekannt und werden mittlerweile in einer Vielzahl von Fahrzeugen verbaut. Sie dienen nicht nur zur Darstellung von Navigations-Informationen, sondern entwickeln sich zu einer zentralen Bedien- und Steuerungsvorrichtung, über die eine Vielzahl von Komponenten im Fahrzeug gesteuert bzw. kontrolliert werden kann. Hierzu besitzt das Fahrerinformationssystem einen Monitor, auf dem relevante Informationen sowie zur Bedienung erforderliche Auswahlmenüs dargestellt werden. Die Bedienung selbst erfolgt in vielen Fällen über ein zentrales Bedienelement, das eine Vielzahl von Freiheitsgraden besitzt. Im einfachsten Fall ist das Bedienelement als Dreh-/Drück-Steller ausgebildet. Zusätzlich zu diesem Dreh-/Drück-Steller sind weitere Bedienelemente wie Taster etc. vorhanden, um insbesondere eine schnelle Navigation innerhalb der Auswahlmenüs zu ermöglichen.

Die Bedienelemente sind in der Regel im mittleren Teil des Armaturenbretts zwischen Fahrer und Beifahrer angeordnet, so dass sie vom Fahrer gut erreicht werden können.

Obgleich sich solche Fahrerinformationssysteme in der Praxis bewährt haben, besteht dennoch der Wunsch, auch im Hinblick auf das Fahrerinformationssystem unterschiedliche "Ausstattungsvarianten" anzubieten, ohne jedoch hohe Kosten für Spezialanfertigungen berechnen zu müssen.

Ein Fahrerinformationssystem mit frei konfigurierbaren Bedienelementen ist aus der DE-A-100 60 981 oder der DE-A-199 08 087 bekannt.

Diese Aufgabe wird von dem Fahrerinformationssystem gemäß Anspruch 1 gelöst.

Das heißt dass die Bedienvorrichtung aus einzelnen voneinander unabhängigen Bedienelementen aufgebaut wird, wobei diese Bedienelemente innerhalb der Halteeinheit an den unterschiedlichsten Stellen einsetzbar sind. Die Bedienvorrichtung ist folglich ähnlich einem Baukastensystem modular aufgebaut, so dass der Benutzer individuell nach den eigenen Bedürfnissen die Anordnung der einzelnen Bedienelemente zueinander selbst festlegen kann. Darüber hinaus bietet dieses Fahrerinformationssystem auf Grund des modularen Aufbaus auch die Möglichkeit, Bedienelemente schnell auszutauschen, beispielsweise weil sie defekt sind oder weil der Benutzer einen anderen Typ von Bedienelement wünscht.

Neben den bereits erwähnten Vorteilen bietet das Fahrerinformationssystem auch die Möglichkeit, dass der Benutzer beispielsweise einen Dreh-/Drück-Steller durch eine Kreuzwippe ersetzen kann.

Dabei weist jedes Bedienelement eine Sendeeinheit auf und der Steuereinrichtung ist eine Empfangseinheit zugeordnet, die die von der Sendeeinheit gelieferten Steuersignale empfängt.

Die Ausstattung jedes Bedienelements mit einer Sendeeinheit, die die von dem eigentlichen Bedienglied, wie Taster, Dreh/Drück-Steller etc., gelieferten Signale empfängt und weiterverarbeitet, macht es möglich, die Steuersignale entsprechend einem bestimmten vorgegebenen Protokoll zu kodieren, so dass die Steuereinrichtung die empfangenen Signale ohne weiteres einem Bedienelement zuordnen kann. Am besten erfolgt die Übertragung der Steuersignale über ein Bussystem, das die Anzahl der notwendigen Leitungen auf ein Minimum reduziert.

Die Übertragung der Steuersignale vom Bedienelement zu der Empfangseinheit der Steuereinrichtung erfolgt drahtlos, beispielsweise optisch oder per Funk. Im Falle der Funkübertragung bietet sich das standardisierte Bluetooth-Protokoll an, was den Vorteil hat, dass beim Aufbau der Bedienelemente auf Standardbauteile zurückgegriffen werden kann.

In einer bevorzugten Weiterbildung weist die Halteeinheit eine vorgegebene Anzahl von Bedienelement-Plätzen auf, in die die Bedienelemente einsetzbar sind.

Diese Maßnahme erleichtert den Aufbau und die Fixierung der Bedienelemente in der Halteeinheit, da entsprechende Fixierungsmittel an den vorgegebenen Plätzen vorgesehen werden können.

In einer bevorzugten Weiterbildung weist jedes Bedienelement zumindest eine Steckleiste auf, die in eine an jedem Bedienelement-Platz vorgesehene Buchsenleiste einsteckbar ist, wobei die Steuersignale über diese Stecker-/Buchsenverbindung drahtgebunden übertragen werden.

In einer bevorzugten Weiterbildung weist jedes Bedienelement ein Befestigungselement auf, das mit einem an einem Bedienelement-Platz vorgesehenen Befestigungselement wieder lösbar zusammenwirkt.

Dies ist eine für den Benutzer sehr einfache Möglichkeit der Befestigung der Bedienelemente. Natürlich wäre es auch denkbar, die einzelnen Bedienelemente, die nebeneinander liegen, miteinander wieder lösbar zu verbinden, so dass nur einige wenige Bedienelemente selbst an der Halteeinheit befestigt werden müssten. Diese Lösung wird insbesondere dann verwendet, wenn die Bedienelemente zueinander verschiebbar innerhalb der Halteeinheit gehalten sind.

Die Bedienelemente können vorzugsweise Stellteilelemente, Lautstärkereglerelemente, Hardkey-Elemente, Keypad-Elemente sein. Es ist jedoch anzumerken, dass diese Aufzählung nicht abschließend ist und weitere Bedienelemente ebenfalls denkbar sind. Die Bedienvorrichtung der vorliegenden Erfindung ist so flexibel, dass sie auch eine Integration von bisher noch nicht im Einsatz befindlichen Stellteil-Typen ermöglicht.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der nachfolgenden Beschreibung und der beiliegenden Zeichnung. Dabei zeigen:
- Fig. 1: eine schematische Darstellung einer Bedienvorrichtung in Draufsicht, wobei verschiedene Möglichkeiten der Steuersignalübertragung beispielhaft dargestellt sind;
- Fig. 2: eine schematische Seitenschnittansicht der Bedienvorrichtung von Fig. 1, und
- Fig. 3: ein schematisches Blockschaltdiagramm eines Fahrerinformationssystems mit einer Bedienvorrichtung.

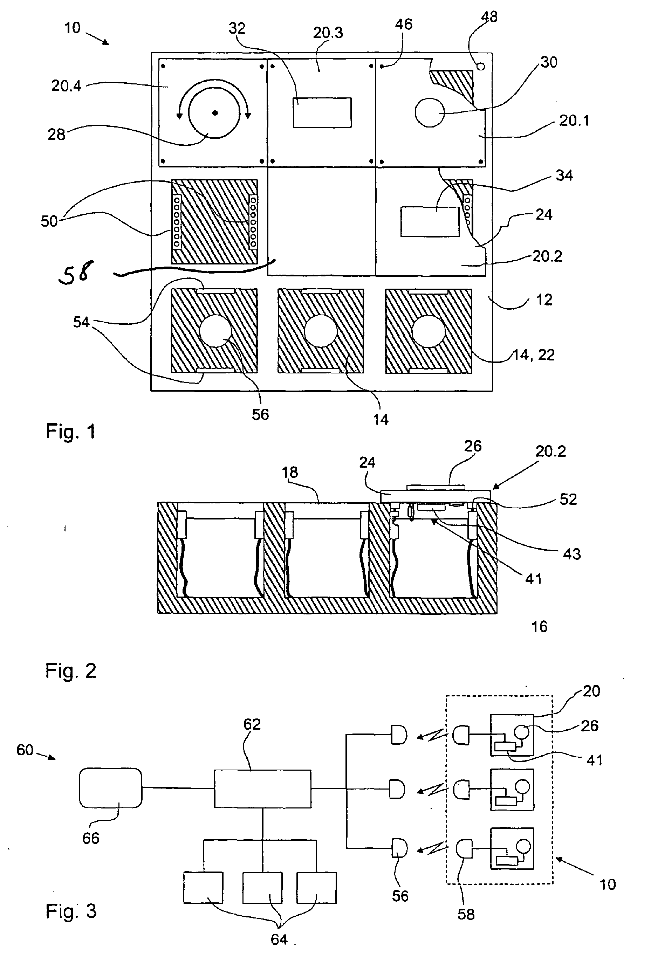

In Fig. 1 ist eine Bedienvorrichtung eines Fahrerinformationssystems schematisch dargestellt und mit dem Bezugszeichen 10 gekennzeichnet. Die Bedienvorrichtung 10 weist ein Rahmengestell 12 auf, an dessen oberer Seite (die in Fig. 1 zu sehen ist) eine Reihe von quadratischen Durchbrüchen 14 bzw. Öffnungen ausgebildet sind. Die Öffnungen 14 sind schachbrettartig angeordnet, wobei im vorliegenden Ausführungsbeispiel insgesamt neun Öffnungen 14 vorgesehen sind. Diese Zahl ist jedoch rein beispielhaft gewählt und kann auch größer oder kleiner sein. Bei der in Fig. 1 gezeigten Ausführungsform sind die insgesamt neun Öffnungen 14 gleichmäßig in drei Spalten und drei Reihen gegliedert, wobei selbstverständlich auch hier gilt, dass unterschiedliche Anordnungen der Öffnung 14 möglich sind.

Das Rahmengestell 12 besitzt, wie in Fig. 2 zu erkennen, eine Grundplatte 16, die beabstandet von der Oberseite 18 liegt. Die Grundplatte 16 wird üblicherweise dazu verwendet, das Rahmengestell 12 im Fahrzeug, üblicherweise in einem Bereich des Armaturenbretts (Mitteltunnel) zwischen Fahrer- und Beifahrersitz, zu befestigen. Hierfür ist eine Vertiefung im Armaturenbrett vorgesehen, so dass die Oberseite 18 bündig zu der umliegenden Oberfläche des Armaturenbretts abschließt.

Die Bedienvorrichtung 10 umfasst ferner eine bestimmte Anzahl von Bedienelement-Einheiten 20.1 bis 20.4, die in den Öffnungen 14 angeordnet sind. Die Öffnungen 14 bilden somit Aufnahmeplätze 22 für die Bedienelement-Einheiten 20. Demnach kann die in Fig. 1 gezeigte Bedienvorrichtung 10 insgesamt neun Bedienelement-Einheiten 20 aufnehmen. Aufnahmeplätze 22, in die keine Bedienelement-Einheiten 20 eingebracht werden, lassen sich mit Deckblenden schließen. In Fig. 1 ist beispielhaft eine solche Deckblende eingezeichnet und mit dem Bezugszeichen 58 gekennzeichnet.

Jede Bedienelement-Einheit 20 ist funktionell in sich abgeschlossen und arbeitet unabhängig von den anderen Bedienelement-Einheiten.

Eine Bedienelement-Einheit 20 umfasst eine Deckplatte 24, an deren Oberseite ein Bedienelement 26 angebracht ist, beispielsweise ein Dreh-/Drück-Steller 28, ein einfacher Drehsteller 30, ein Keypad 32 oder ein Taster 34, um nur einige wenige Bedienelemente zu nennen.

Auf der Unterseite der Deckplatte 24 ist eine Steuerschaltung 41 angebracht, die, wie in Fig. 2 dargestellt, unterschiedliche elektronische Bauelemente 43 umfasst. Die Steuerschaltung 41 ist mit dem Bedienelement 26 verbunden und empfängt Steuersignale entsprechend der vorgenommenen Betätigung des Bedienelements 26.

Die Abdeckplatte 24 ist hinsichtlich ihrer Abmessungen so ausgelegt, dass sie die Öffnung 14 vollständig abdeckt, wobei die an der Unterseite der Abdeckplatte 24 vorgesehene Steuerschaltung 41 mit den elektronischen Bauelementen in die Öffnung 14 hineinragt, was deutlich in Fig. 2 zu sehen ist.

Bei der vorliegenden Ausführungsform wurde die Größe der Abdeckplatte 24 zudem so ausgewählt, dass Deckplatten benachbarter Bedienelement-Einheiten 20 im eingesetzten Zustand direkt aneinander grenzen, so dass möglichst kein Spalt zwischen den Platten mehr frei bleibt.

Die Befestigung der Bedienelement-Einheiten 20 an dem Rahmengestell 12 kann auf unterschiedliche Art und Weise erfolgen, wobei in Fig. 1 rein beispielhaft drei Möglichkeiten dargestellt sind. Es versteht sich jedoch, dass die Befestigungsart für eine Bedienvorrichtung einheitlich ist.

In der oberen Zeile weisen die Deckplatten 24 in ihren Ecken jeweils eine Bohrung 46 auf, in die beispielsweise eine Schraube eingeschraubt und in einer entsprechend im Rahmengestell vorgesehenen Gewindebohrung 48 verschraubt werden kann.

Statt der Schrauben könnten selbstverständlich auch an der Unterseite der Deckplatte 24 angebrachte Bolzen verwendet werden, die in Bohrungen 48 im Rahmengestell 12 eingesteckt und dort verrastet werden können.

In der mittleren Zeile in Fig. 1 wird eine Steckerverbindung zur Fixierung der Bedienelement-Einheit am Rahmengestell 12 benutzt, wobei Buchsenleisten 50 an zumindest zwei einander gegenüberliegenden Seiten der Öffnung 14 angebracht sind. Passend zu dieser Buchsenleiste 50 ist an der Unterseite der Deckplatte 24 eine Steckerleiste angebracht, die in Fig. 2 mit dem Bezugszeichen 52 gekennzeichnet ist. Diese Steckerleiste 52 passt in die Buchsenleiste 50 und übernimmt durch entsprechende Dimensionierung der Buchsenhaltekräfte die Fixierung der Deckplatte am Rahmengestell 12.

Eine dritte Möglichkeit der Fixierung ist in der untersten Reihe in Fig. 1 dargestellt. Hier sind Rastelemente 54 an einander gegenüberliegenden Seiten der Öffnung 14 vorgesehen, die in an der Unterseite der Deckplatte 24 vorgesehene Rast-Gegenstücke einrastbar sind.

Wie bereits erwähnt, sind diese drei Möglichkeiten rein beispielhaft genannt und sind daher nicht als abschließend zu betrachten.

Wie allgemein bekannt ist, wird die Bedienvorrichtung 10 dazu eingesetzt, ein Fahrerinformationssystem zu steuern, indem Funktionen ausgewählt und bestimmte Werte eingegeben werden. Hierfür stehen dann die einzelnen Bedienelemente der Bedienelement-Einheiten 20 zur Verfügung.

Um diese von den einzelnen Bedienelementen erzeugten Steuersignale zu der zentralen Steuereinrichtung zu übermitteln, sind in Fig. 1 beispielhaft drei Möglichkeiten gezeigt.

Die erste Möglichkeit, die in der ersten Reihe angedeutet ist, besteht darin, die Steuersignale per Funk, vorzugsweise nach dem Bluetooth-Protokoll zu einem entfernten Empfänger zu übertragen, der mit der zentralen Steuereinheit verbunden ist. Die Sendeeinheit für diese drahtlose Übertragung der Steuersignale ist Teil der Steuerschaltung 41 einer Bedienelement-Einheit, wobei die Empfangseinheit innerhalb des Rahmengestells 12 der Bedienvorrichtung 10 liegt, um insbesondere die erforderliche Sendeleistung so gering wie möglich zu halten.

Die in der zweiten Reihe in Fig. 1 gezeigte Lösung, die nicht Teil der Erfindung ist, ist drahtgebunden und erfolgt durch die Steckerverbindung zwischen Bedienelement-Einheit 20 und Steckerleiste 50. Über diese Steckverbindung werden elektrische Verbindungen hergestellt, die eine Übertragung der Steuersignale zu der zentralen Steuereinheit zulassen.

Schließlich ist in Fig. 1 noch eine optische Übertragung der Steuersignale angedeutet, wobei hierfür unterhalb jeder Öffnung 14 ein optisches Empfangselement 56, beispielsweise in Form eines Fototransistors, angeordnet ist. Als Gegenstück ist an der Unterseite jeder Abdeckplatte 24 ein optisches Sendeelement, beispielsweise in Form einer Infrarot-LED, vorgesehen, die nach unten auf das Empfangselement 56 strahlt.

In Fig. 3 ist ein vereinfachtes Blockschaltdiagramm eines Fahrerinformationssystems dargestellt und mit dem Bezugszeichen 60 gekennzeichnet. Ein Bestandteil dieses Fahrerinformationssystems ist die bereits beschriebene Bedienvorrichtung 10. Ferner gehört zu dem Fahrerinformationssystem eine zentrale Steuereinheit 62, die der Steuerung unterschiedlichster Komponenten in einem Fahrzeug dient, wobei solche Komponenten beispielsweise Audiokomponenten, Navigations-Komponenten etc. sind. Zur Darstellung von Auswahlmenüs und anderen Informationen dient ein im Armaturenbrett vorgesehener Monitor 66, der von der Steuereinrichtung 62 angesteuert wird.

Im Blockschaltdiagramm der Fig. 3 ist die optische Übertragung dargestellt, die mit Hilfe von IR-LEDs 58 und Phototransistoren 56 möglich ist.

Da die Bedienelement-Einheiten 20 an jedem beliebigen Aufnahmeplatz 22 angeordnet werden können, wird zur Identifikation des jeweiligen Steuersignals eine spezifische Identifikationsinformation mit übertragen. Die Steuereinrichtung 62 ist damit in der Lage, die Steuersignale den jeweiligen sendenden Bedienelement-Einheiten 20 zuzuordnen.

Die erfindungsgemäße Bedienvorrichtung 10 bietet somit die Möglichkeit, die einzelnen Bedienelement-Einheiten 20 angepasst an die individuellen Bedürfnisse an beliebigen Aufnahmeplätzen 22 anzubringen.

## Patentansprüche

1. Fahrerinformationssystem mit einer Bedienvorrichtung (10), die zumindest zwei Bedienelemente (20) und eine Halteeinheit (12) für die Bedienelemente aufweist, und mit einer Steuereinrichtung (62) zur Auswertung der von den Bedienelementen (20) gelieferten Steuersignale, wobei die Bedienelemente (20) bezüglich der Halteeinheit (12) frei konfigurierbar sind, **dadurch gekennzeichnet, dass** jedes Bedienelement (20) eine Sendeeinheit (41) zur drahtlosen Übertragung der Steuersignale aufweist, und dass der Steuereinrichtung (62) eine Empfangseinheit zugeordnet ist, die die von der Sendeeinheit (41) gelieferten Steuersignale empfängt, wobei die Sendeeinheit (41) die Steuersignale entsprechend einem vorgegebenen Protokoll so kodiert, dass die Steuereinrichtung (62) die empfangenen Signale einem Bedienelement zuordnen kann, wobei die Empfangseinheit innerhalb der Halteeinheit liegt.

2. Fahrerinformationssystem nach Anspruch 1, **dadurch gekennzeichnet, dass** die Sendeeinheit die Steuersignale optisch überträgt.

3. Fahrerinformationssystem nach Anspruch 1, **dadurch gekennzeichnet, dass** die Sendeeinheit (41) die Steuersignale per Funk überträgt.

4. Fahrerinformationssystem nach Anspruch 3, **dadurch gekennzeichnet, dass** die Sendeeinheit (41) und die Empfangseinheit (62) zur Übertragung nach dem Bluetooth-Protokoll ausgelegt sind.

5. Fahrerinformationssystem nach einem der vorhergehenden Ansprüche, **dadurch gekennzeichnet, dass** die Halteeinheit (12) eine vorgegebene Anzahl von Bedienelement-Plätzen (22) aufweist, in die die Bedienelemente (20) einsetzbar sind.

6. Fahrerinformationssystem nach einem der Ansprüche 1 bis 5, **dadurch gekennzeichnet, dass** die Bedienelemente (20) zueinander verschiebbar von der Halteeinheit (12) gehalten sind.

7. Fahrerinformationssystem nach einem der Ansprüche 1 bis 6, **dadurch gekennzeichnet, dass** jedes Bedienelement (20) ein Befestigungselement aufweist, das mit einem an einem Bedienelement-Platz vorgesehenen Befestigungselement (54) wieder lösbar zusammenwirkt.

8. Fahrerinformationssystem nach einem der vorhergehenden Ansprüche, **dadurch gekennzeichnet, dass** die Bedienelemente (20) Stellteilelemente (28), Lautstärkereglerelemente (30), Hardkey-Elemente (34), Keypad-Elemente (32) sein können.

9. Fahrerinformationssystem nach einem der vorhergehenden Ansprüche, **dadurch gekennzeichnet, dass** die Bedienelemente (20) identische Deckplatten (24) aufweisen.

## Claims

1. Driver information system with an operating device (10) including at least two operating elements (20) and a support unit (12) for said operating elements, and with a control unit (62) for evaluating control signals supplied by the control elements (20), wherein the control elements (20) are freely configurable with respect to the support unit (12), **characterized in that** each operating element (20) includes a transmitting unit (41) for a wireless transmission of said control signals, and that a receiving unit receiving the control signals supplied by said transmitting unit (41) is associated with said control unit (62), wherein the transmitting unit (41) encodes the control signals according to a predetermined protocol, so that the control unit (62) can associate the received signals with an operating element, wherein the receiving unit is arranged inside of said support unit.

2. Driver information system according to claim 1, **characterized in that** the transmitting unit transmits said control signals optically.

3. Driver information system according to claim 1, **characterized in that** the transmitting unit (41) transmits said control signals by means of radio communication.

4. Driver information system according to claim 3, **characterized in that** the transmitting unit (41) and the receiving unit (62) are adapted for a transmission according to the Bluetooth protocol.

5. Driver information system according to any of the preceding claims, **characterized in that** the support unit (12) includes a predetermined number of control element sides, into which the control elements (20) are insertable.

6. Driver information system according to any of claims 1 to 5, **characterized in that** the control elements (20) are supported slidably to each other by the support unit (12).

7. Driver information system according to any of claims 1 to 6, **characterized in that** each control element (20) includes a mounting element, which detachably interacts with a mounting element (54) provided at a control element side.

8. Driver information system according to any of the preceding claims, **characterized in that** the control elements (20) can be actuator elements (28), volume control elements (30), hard key elements (34), keypad elements (32).

9. Driver information system according to any of the preceding claims, **characterized in that** the control elements (20) include identical cover plates (24).

## Revendications

1. Système d'information du conducteur, comportant un dispositif de manoeuvre (10), qui comporte au moins deux éléments de manoeuvre (20) et une unité de support (12) pour les éléments de manoeuvre, et comportant un dispositif de commande (62), destiné à analyser les signaux de commande délivrés par les éléments de manoeuvre (20), lesdits éléments de manoeuvre (20) pouvant être configurés librement par rapport à l'unité de support (12), **caractérisé en ce que** chaque élément de manoeuvre (20) comporte une unité d'émission (41) pour la transmission sans fil des signaux de commande, et **en ce qu'**au dispositif de commande (62) est associée une unité de réception qui reçoit les signaux de commande délivrés par l'unité d'émission (41), ladite unité d'émission (41) codant les signaux de commande conformément à un protocole défini, de telle sorte que le dispositif de commande (62) peut associer à un élément de manoeuvre les signaux reçus, l'unité de réception étant située à l'intérieur de l'unité de support.

2. Système d'information du conducteur selon la revendication 1, **caractérisé en ce que** l'unité d'émission transmet par voie optique les signaux de commande.

3. Système d'information du conducteur selon la revendication 1, **caractérisé en ce que** l'unité d'émission (41) transmet par radio les signaux de commande.

4. Système d'information du conducteur selon la revendication 3, **caractérisé en ce que** l'unité d'émission (41) et l'unité de réception (62) sont réalisées pour la transmission selon le protocole Bluetooth.

5. Système d'information du conducteur selon l'une quelconque des revendications précédentes, **caractérisé en ce que** l'unité de support (12) comporte un nombre défini d'emplacements (22), dans lesquels peuvent être insérés les éléments de manoeuvre (20).

6. Système d'information du conducteur selon l'une quelconque des revendications 1 à 5, **caractérisé en ce que** les éléments de manoeuvre (20) sont maintenus par l'unité de support (12) de manière à pouvoir se déplacer les uns par rapport aux autres.

7. Système d'information du conducteur selon l'une quelconque des revendications 1 à 6, **caractérisé en ce que** chaque élément de manoeuvre (20) comporte un élément de fixation, qui coopère, de manière détachable, avec un élément de fixation (54), prévu à un emplacement pour élément de manoeuvre.

8. Système d'information du conducteur selon l'une quelconque des revendications précédentes, **caractérisé en ce que** les éléments de manoeuvre (20) peuvent être des éléments de réglage (28), des éléments de réglage du volume (30), des éléments hardkey (34), des éléments de pavé numérique (32).

9. Système d'information du conducteur selon l'une quelconque des revendications précédentes, **caractérisé en ce que** les éléments de manoeuvre (20) comportent des plaques de recouvrement (24) identiques.
